# EUROPEAN PATENT SPECIFICATION

(11) **EP 2 928 142 B1**
(45) Date of publication and mention of the grant of the patent: **27.09.2017**
(21) Application number: 13864947.0
(22) Date of filing: 07.08.2013
(51) Int. Cl.: H04L 29/06, H04M 7/00

(54) **METHOD AND DEVICE FOR TRANSMITTING INFORMATION UNDER IMS ARCHITECTURE, AND COMMUNICATION SYSTEM**
VERFAHREN UND VORRICHTUNG ZUR ÜBERTRAGUNG VON INFORMATIONEN UNTER IMS-ARCHITEKTUR UND KOMMUNIKATIONSSYSTEM
PROCÉDÉ ET DISPOSITIF DE TRANSMISSION D'INFORMATIONS DANS UNE ARCHITECTURE IMS, ET SYSTÈME DE COMMUNICATION

(30) Priority: 20.12.2012 CN 201210558431
(43) Date of publication of application: 07.10.2015
(73) Proprietor: Huawei Technologies Co., Ltd., Longgang District Shenzhen, Guangdong 518129 (CN)
(72) Inventor: SU, Shaolong, Shenzhen Guangdong 518129 (CN)
(74) Representative: Epping - Hermann - Fischer
(86) International application number: PCT/CN2013/080949
(87) International publication number: WO 2014/094438

(56) References cited:
- EP-A1- 1 786 162
- EP-A1- 2 536 078
- CN-A- 101 132 378
- CN-A- 101 931 907
- CN-A- 103 078 846
- US-B1- 7 650 415

## Description

### TECHNICAL FIELD

The present invention relates to the field of communications, and in particular, to a method, an apparatus and a communications system for transferring information under an IMS architecture.

### BACKGROUND

IMS (IP Multimedia Subsystem, IP multimedia subsystem) is a brand-new multimedia service architecture, and can meet end users' existing need for more novel and more diversified multimedia services. IMS, which is in wide application, uses the SIP (Session Initiation Protocol, Session Initiation Protocol) protocol as a session control protocol, makes use of advantages of the SIP, such as simplicity, flexibility, easy extensibility, and convenience of media negotiation, to make it more future proof.

However, in the field of communications networks, some communications systems still use channel associated signaling. Standard channel associated signaling is referred to as R2 signaling, and the R2 signaling is classified into line signaling and register signaling according to functions. The line signaling includes some line monitoring signals, and is mainly used to monitor a state of a trunk line and control call connection. The register signaling includes a selection signal and some service signals, is mainly used to select a route, select a called user, manage a telephone network, and so on. The register signaling is classified into two types, namely forward signaling and backward signaling. The forward signaling is used to transfer information such as an address and control indicator, and the backward signaling is mainly used for acknowledgment and control. Backward register signals may be classified by function into: group-A backward signals and group-B backward signals. A group-B backward signal is used to indicate a state of a called user. Many countries are now basing their R2 signaling on ITU-T standard R2 signaling; however, in other countries, there also exist Brazil R2 signaling and Thai R2 signaling to suit needs of different operators. The following table lists common definitions of the R2 group-B signaling:

**Table 1**

| | ITUT R2 | Brazil R2 | Thai R2 |
|---|---|---|---|
| B-1 | Spare for national use | Called-user line free, charge | Called-user line free, charge |
| B-2 | Send special information tone | Called-user line busy | Called-user line busy |
| B-3 | User line busy | Number of called-user line changed | Called-user line transferred to interception center |
| B-4 | congestion | congestion | congestion |
| B-5 | Unallocated number | Called-user line free, no charge | Called-user line free, no charge |
| B-6 | User line free, charge | Called-user line free, charge, and called party release | Called-user line free, called party release |
| B-7 | User line free, no charge | Express or free call | unavailable |
| B-8 | User line out of order | User line out of order | |
| B-9 to B15 | Spare for national use | | |

During communication in a communications network, there are cases when communication needs to be performed between a communications system supporting an IMS protocol and a communications system supporting the R2 protocol; if so happens, conversion between R2 signaling and SIP information needs to be implemented. However, during a research process of the application, the inventor finds that, most R2 group-B information can be converted into corresponding SIP information, for example, ITU-T B-3 information indicating user line busy is mapped to a SIP response code 486, and ITU-T B-5 information indicating unallocated number is mapped to a SIP response code 404. However, it is found that some of group-B signals indicating user line free are indiscriminately mapped to SIP response codes 180/183, where the response code 180 can only indicate that a user state is ringing, and the response code 183 can only indicate that a user state is session in progress. Additional information indicated by the group-B signals cannot be distinguished by these response codes, and the additional information includes: "user line free, charge"; "user line free, no charge"; "called-user line free, charge, called party release"; "express or free call"; "called-user line transferred to interception center"; and "called-user line free, called party release". In this case, when IMS communicates with another communications network supporting R2 signaling, a problem of information loss exists, thereby resulting in low reliability of information transmission.

The Document US 7,650,415 B1 discloses a method for providing messaging between a first communication device and a second communication device using a gateway is provided. The method comprises: receiving a first message from the first communication device addressed to the gateway; initiating a first session with the first communication device; initiating a second session with the second communication device; and sending a second message corresponding to the first message to the second communication device in the second session.

### SUMMARY

In view of this, an objective of the present invention is to provide a method, an apparatus and a communications system for transferring information under an IMS architecture, so as to improve security of transferring information under an IMS architecture as defined in the claims. A specific implementation solution is as follows: According to a first aspect, the method for transferring information under an IMS architecture includes:
receiving R2 response information transmitted by a called end; and
converting the R2 response information into corresponding SIP response information, and adding a response identifier corresponding to the R2 response information to the SIP response information.

With reference to the first aspect, in a first possible implementation of the first aspect, before the receiving R2 response information transmitted by a called end, the method further includes:
receiving SIP call request information transmitted by a calling end; and
converting the SIP call request information into corresponding R2 call request information, and transmitting the R2 call request information to the called end, so that the called end generates corresponding R2 response information according to the R2 call request information.

The response identifier is added to an information header field of the SIP response information; and
the response identifier includes: a user line state parameter, and/or a charge indicator parameter, and/or a parameter indicating whether call release is controlled by a calling or called party, and/or a call type parameter, and/or a forward-to-interception-center parameter.

The present invention further discloses a method for transferring information under an IMS architecture. According to a first aspect, the method for transferring information under an IMS architecture includes:
receiving SIP response information that includes a response identifier and is transmitted by a called end; and
acquiring user state information according to the response identifier, and converting the user state information and the SIP response information into corresponding R2 response information.

With reference to the first aspect, in a first possible implementation of the first aspect, before the receiving SIP response information that includes a response identifier and is transmitted by a called end, the method further includes:
receiving R2 call request information transmitted by a calling end; and
converting the R2 call request information into corresponding SIP call request information, and transmitting the SIP call request information to the called end, so that the called end generates corresponding SIP response information that includes a response identifier.

The response identifier is added to an information header field of the SIP response information; and
the response identifier includes: a user line state parameter, and/or a charge indicator parameter, and/or a parameter indicating whether call release is controlled by a calling or called party, and/or a call type parameter, and/or a forward-to-interception-center parameter.

The present invention further discloses a method for transferring information under an IMS architecture. According to a first aspect, the method for transferring information under an IMS architecture includes:
receiving SIP call request information; and
generating, according to the SIP call request information, corresponding SIP response information that includes a response identifier, where
the response identifier is added to an information header field of the SIP response information; and
the response identifier includes: a user line state parameter, and/or a charge indicator parameter, and/or a parameter indicating whether call release is controlled by a calling or called party, and/or a call type parameter, and/or a forward-to-interception-center parameter.

Correspondingly, the present invention further discloses an apparatus for transferring information under an IMS architecture. According to a first aspect, the apparatus for transferring information under an IMS architecture includes:
a first response information receiving module, configured to receive R2 response information transmitted by a called end; and
a first response information converting module, configured to convert the R2 response information into corresponding SIP response information, and add a response identifier corresponding to the R2 information to the SIP response information.

With reference to the first aspect, in a first possible implementation of the first aspect, the apparatus for transferring information under an IMS architecture further includes:
a first request information receiving module, configured to receive SIP call request information transmitted by a calling end; and
a first request information converting module, configured to convert the SIP call request information into corresponding R2 call request information, and transmit the R2 call request information to the called end, so that the called end generates corresponding R2 response information according to the R2 call request information.

Correspondingly, the present invention further discloses an apparatus for transferring information under an IMS architecture. According to a first aspect, the apparatus for transferring information under an IMS architecture includes:
a second response information receiving module, configured to receive SIP response information that includes a response identifier and is transmitted by a called end; and
a second response information converting module, configured to acquire user state information according to the response identifier, and convert the user state information and the SIP response information into corresponding R2 response information.

With reference to the first aspect, in a first possible implementation of the first aspect, the apparatus for transferring information under an IMS architecture further includes:
a second request information receiving module, configured to receive R2 call request information transmitted by a calling end; and
a second request information converting module, configured to convert the R2 call request information into corresponding SIP call request information, and transmit the SIP protocol call request information to the called end, so that the called end generates corresponding SIP response information that includes a response identifier.

Correspondingly, the present invention further discloses an apparatus for transferring information under an IMS architecture. According to a first aspect, the apparatus for transferring information under an IMS architecture includes:
a third request information receiving module, configured to receive SIP call request information; and
a response information generating module, configured to generate, according to the SIP call request information, corresponding SIP response information that includes a response identifier.

Correspondingly, the present invention further discloses a communications system, where the communications system includes an apparatus for transferring information under an IMS architecture; and the apparatus for transferring information under an IMS architecture includes: a first response information receiving module and a first response information converting module, and in addition, the apparatus for transferring information under an IMS architecture may further include: a first request information receiving module and a first request information converting module.

Correspondingly, the present invention further discloses a communications system, where the communications system includes an apparatus for transferring information under an IMS architecture; and the apparatus for transferring information under an IMS architecture includes: a second response information receiving module and a second response information converting module, and in addition, the apparatus for transferring information under an IMS architecture may further include: a second request information receiving module and a second request information converting module.

Correspondingly, the present invention further discloses a communications system, where the communications system includes an apparatus for transferring information under an IMS architecture, and the apparatus for transferring information under an IMS architecture includes: a third request information receiving module and a response information generating module.

Correspondingly, the present invention further discloses a communications apparatus, where the communications apparatus includes a processor and a memory coupled to the processor;
the processor is configured to receive R2 response information transmitted by a called end, convert the R2 response information into corresponding SIP response information, and add a response identifier corresponding to the R2 information to the SIP response information; and
the memory is configured to store information that includes a program run by the processor.

Further, the present invention further discloses a communications apparatus, where the communications apparatus includes a processor and a memory coupled to the processor;
the processor is configured to receive SIP response information that includes a response identifier and is transmitted by a called end, and convert the SIP response information that includes the response identifier into corresponding R2 response information; and
the memory is configured to store information that includes a program run by the processor.

Further, the present invention further discloses a communications apparatus, where the communications apparatus includes a processor and a memory coupled to the processor;
the processor is configured to receive SIP call request information, and generate, according to the SIP call request information, corresponding SIP response information that includes a response identifier; and
the memory is configured to store information that includes a program run by the processor.

By using the method, the apparatus and the system for transferring information under an IMS architecture, which are disclosed above, when a communications system supporting R2 protocol information communicates with a communications system supporting SIP protocol information, conversion may be performed by an IMS system. To prevent user state information from being lost when R2 response information is converted into SIP response information, a response identifier related to a user state is added to the SIP response information, so as to convey a user state of a called end which otherwise cannot be reflected by the SIP response information; and in addition, when the called end supports the SIP protocol, the called end directly generates, after receiving SIP call request information, SIP response information that includes a response identifier, so that a calling end can acquire complete user state information of the called end.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of an IMS system and a communications system connected to the IMS system according to the prior art;
FIG. 2 is a schematic diagram of a working procedure of a method for transferring information under an IMS architecture according to an embodiment of the present invention;
FIG. 3 is a schematic diagram of a working procedure of yet another method for transferring information under an IMS architecture according to an embodiment of the present invention;
FIG. 4 is a schematic diagram of information interaction of a method for transferring information under an IMS architecture according to an embodiment of the present invention;
FIG. 5 is a schematic diagram of a working procedure of yet another method for transferring information under an IMS architecture according to an embodiment of the present invention;
FIG. 6 is a schematic diagram of a working procedure of yet another method for transferring information under an IMS architecture according to an embodiment of the present invention;
FIG. 7 is a schematic diagram of information interaction of yet another method for transferring information under an IMS architecture according to an embodiment of the present invention;
FIG. 8 is a schematic diagram of a working procedure of yet another method for transferring information under an IMS architecture according to an embodiment of the present invention;
FIG. 9 is a schematic structural diagram of an apparatus for transferring information under an IMS architecture according to an embodiment of the present invention;
FIG. 10 is a schematic structural diagram of yet another apparatus for transferring information under an IMS architecture according to an embodiment of the present invention; and
FIG. 11 is a schematic structural diagram of yet another apparatus for transferring information under an IMS architecture according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the prior art, when an IMS system uses SIP protocol information to communicate with an apparatus supporting R2 signaling, information loss occurs, and consequently reliability of information transmission is low. To solve this problem, the present invention provides a method, an apparatus and a communication system for transferring information under an IMS architecture.

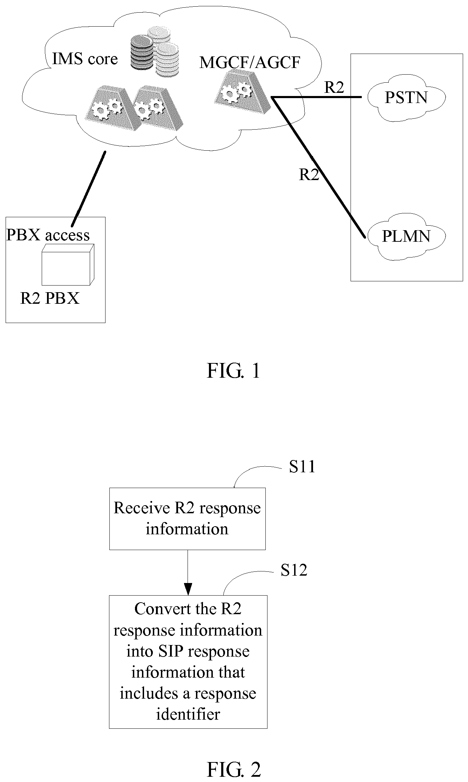

Refer to a schematic diagram of an application scenario shown in FIG. 1. IMS core represents a core architecture of an IMS system; MGCF (Media Gateway Control Function) represents a media gateway control function, AGCF (Access Gateway Control Function) represents an access gateway control function, and both the MGCF and the AGCF are a compositional part of the IMS system and are used to execute a protocol conversion function; the IMS system supports the SIP protocol; a public switched telephone network (Public Switch Telephone Network, PSTN) is a telephone network for daily use, supports the R2 protocol, and is used to receive a call request from the IMS system; a public land mobile network (Public Land Mobile Network, PLMN) supports the R2 protocol, receives a call request from the IMS system, and is used to provide land mobile telecommunications services to the public; the PSTN and the PLMN generally serve as a called end during a mobile communication process; and a private branch exchange (Private Branch Exchange, PBX) supports the R2 protocol, is connected to the IMS system, and generally serves as a calling end during mobile communication.

The present invention discloses a method for transferring information under an IMS architecture. Referring to a schematic diagram of a working procedure shown in FIG. 2, a method for transferring R2 information disclosed in Embodiment 1 of the present invention includes the following steps:
Step S 11: Receive R2 response information transmitted by a called end.
Step S12: Convert the R2 response information into corresponding SIP response information, and add a response identifier corresponding to the R2 response information to the SIP response information.

The method disclosed in step S11 to step S12 is applicable to a situation in which a calling end supports the SIP protocol, but a called end supports the R2 protocol. After receiving an R2 response information, an IMS system converts the R2 response information into a corresponding SIP response information, and adds a response identifier corresponding to the R2 response information to the SIP response information. The response identifier includes the following parameters: a User-state parameter indicating a user line state, and/or a charge indicator parameter Charge, and/or a Call-Control parameter indicating whether call release is controlled by a calling or called party, and/or a call type parameter Express-or-free, and/or a Forward-to-Interception-center parameter.

Specifically, the IMS system parses the R2 response information after receiving the R2 response information transmitted by the called end. When the R2 response information indicates that a user line state is called-user line free, a value of the User-state parameter is idle; when charging is performed, a value of the charge indicator parameter Charge is yes; a value of the Call-Control parameter includes: caller-control, called-control, first-party-control, and last-party-control; when it is learned, according to the R2 response information, that a call at the called end is an express call, a value of the call type parameter Express-or-free is Express, and when the call is a free call, a value of the call type parameter Express-or-free is free; and when it is learned, according to the R2 response information, that the call is forwarded to an interception center, the Forward-to-Interception-center parameter is added to the response identifier, indicating that the called-user line is forwarded to an interception center.

The response identifier is generally added to an information header field of the SIP response information. To enable the SIP response information converted from the R2 response information to fully convey a meaning of the R2 response information, an extension header field for channel associated signaling information (P-CAS-INFO, Channel Associated Signalling Information) is added to the SIP response information, so as to add the corresponding response identifier. Apparently, the response identifier may also be added to another position in the SIP response information, which is not limited in the present invention.

According to the method provided in the present invention, an IMS system converts R2 response information into corresponding SIP response information after receiving the R2 response information, and adds a response identifier corresponding to the R2 response information to the SIP response information, so that content of the R2 response information can be completely derived from the response identifier and the SIP response information, thereby improving reliability of information transmission between the IMS system and a communications network supporting R2 information.

In addition, after obtaining the SIP response information including a response identifier, the IMS system transmits the SIP response information to a calling end, so that the calling end acquires a user state at the called end.

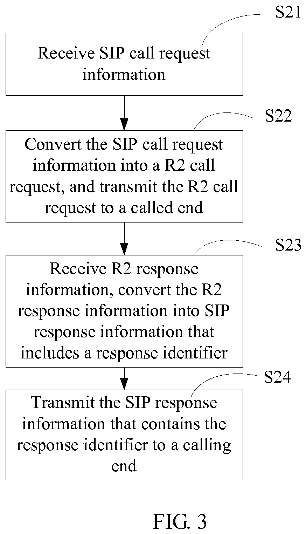

Further, the present invention further discloses a second embodiment. Referring to a schematic diagram of a working procedure disclosed in FIG. 3, the second embodiment specifically includes the following steps:
Step S21: An IMS system receives SIP call request information transmitted by a calling end.
Step S22: The IMS system converts the SIP call request information into corresponding R2 call request information, and transmits the R2 call request information to a called end, so that the called end generates corresponding R2 response information according to the R2 call request information.
Step S23: The IMS system receives the R2 response information transmitted by the called end, converts the R2 response information into corresponding SIP response information, and adds a response identifier corresponding to the R2 response information to the SIP response information.
Step S24: The IMS system transmits the SIP response information including the response identifier to the calling end, so that the calling end acquires a user state at the called end.

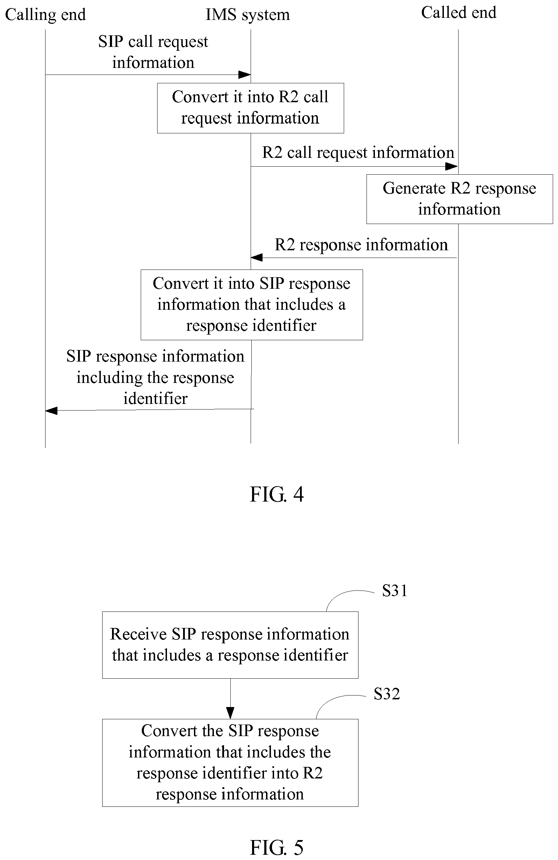

Specifically, when the user state at the called end is "called-user line free, charge", refer to a flowchart of information interaction shown in FIG. 4, which includes the following steps:
Step S101: A calling end generates SIP call request information, and transmits the SIP call request information to an IMS system.
Step S102: The IMS system converts the SIP call request information into R2 call request information, and transmits the R2 call request information to a called end.
Step S103: After receiving the R2 call request information, the called end generates B-6 R2 response information according to the user state, namely "called-user line free, charge", and transmits the B-6 R2 response information to the IMS system.
Step S104: The IMS system converts the B-6 R2 response information into corresponding SIP response information, generates, according to the B-6 information, the following response identifier: "user-state=idle, and charge=yes", and adds the response identifier to the SIP response information. Specifically, the response identifier may be added to an extension information header field in the SIP response information, or apparently, may be added in another form, which is not limited in the present invention.
Step S105: The IMS system transmits the SIP response information including the response identifier to the calling end.

The foregoing solution of converting the B-6 information into SIP information is merely an example. Another R2 response information may be generated according to the user state at the called end, and is converted by the IMS system into SIP response information. For example, the IMS system converts SIP request information into ITUT R2 call request information, and transmits the ITUT R2 call request information to a PSTN user. If a state of the PSTN user is "called-user line free, no charge", the PSTN user generates B-7 R2 response information, the IMS system converts the B-7 R2 response information into SIP response information, and meanwhile generates a response identifier: "user-state=idle, and charge=no", and then adds the response identifier to the SIP response information.

In addition, in the event that an operator at the called end uses Brazil R2 signaling, the IMS system converts SIP request information into corresponding Brazil R2 call request information after generating the SIP request information, and transmits the Brazil R2 call request information to the called end. If the user state at the called end is "called-user line free, charge", the called end returns Brazil R2 B-1 signaling after the called end rings, and the IMS system converts the B-1 signaling into SIP response information after receiving the B-1 signaling, and meanwhile the IMS system generates a response identifier: "user-state=idle, and charge=yes", and then adds the response identifier to the SIP response information. If the user state at the called end is "called-user line free, no charge", the called end returns Brazil signaling B-5 signaling after receiving the Brazil R2 request information transmitted by the IMS system, and the IMS system converts the B-5 signaling into SIP response information after receiving the B-5 signaling, and meanwhile the IMS system generates a response identifier: "user-state=idle, and charge=no", and then adds the response identifier to the SIP response information. If the user state at the called end is "called-user line free, charge, called party release", the called end returns Brazil signaling B-6 signaling after receiving the Brazil R2 request information transmitted by the IMS system, and the IMS system converts the B-6 signaling into SIP response information after receiving the B-6 signaling, and meanwhile the IMS system generates a response identifier: "user-state=idle, charge=yes, and Call-Control=called-control", and then adds the response identifier to the SIP response information. If the user state at the called end is Express or free, the called end returns Brazil signaling B-7 signaling after receiving the Brazil R2 request information transmitted by the IMS system, and the IMS system converts the B-7 signaling into SIP response information after receiving the B-7 signaling, and meanwhile the IMS system generates a response identifier: Express-or-free, and adds the response identifier to the SIP response information.

Moreover, when an operator at the called end uses Thai R2 signaling, the IMS system converts SIP request information into corresponding Thai R2 call request information after generating the SIP request information, and transmits the Thai R2 call request information to the called end. If the user state at the called end is forwarded to an interception center, the called end returns Thai R2 B-3 signaling after the called end rings, and the IMS system converts the B-3 signaling into SIP response information after receiving the B-3 signaling, and meanwhile the IMS system generates a response identifier: Forward-to-Interception-center, and adds the response identifier to the SIP response information. Apparently, the called end may also generate other Thai R2 response information according to the user state, which is not limited in the present invention.

In addition to the above, in this method, a PSTN may serve as a called end, or a PLMN or another communications system may serve as a called end depending on the communications service in use, which is not limited in the present invention.

In addition, a third embodiment of the present invention further discloses a method for transferring information under an IMS architecture. Referring to a schematic diagram of a working procedure shown in FIG. 5, the method specifically includes:
Step S31: Receive SIP response information that includes a response identifier and is transmitted by a called end.
Step S32: Acquire user state information according to the response identifier, and convert the user state information and the SIP response information into corresponding R2 response information.

The method disclosed in step S31 to step S32 is applicable to a situation in which a calling end supports the R2 protocol, but a called end supports the SIP protocol. In this method, an IMS system converts SIP response information that includes a response identifier into corresponding R2 response information after receiving the SIP response information that includes the response identifier. The response identifier includes the following parameters: a User-state parameter indicating a user line state, and/or a charge indicator parameter Charge, and/or a Call-Control parameter indicating whether call release is controlled by a calling or called party, and/or a call type parameter Express-or-free, and/or a Forward-to-Interception-center parameter.

Specifically, when a user state at the called end is called-user line free, a value of the User-state parameter is idle. When charging is performed, a value of the charge indicator parameter Charge is yes. A value of the Call-Control parameter includes: caller-control, called-control, first-party-control, and last-party-control. When a call at the called end is an express call, a value of the call type parameter Express-or-free is Express. When a call at the called end is a free call, a value of the call type parameter Express-or-free is free. When a call at the called end is forwarded to an interception center, the Forward-to-Interception-center parameter is added to the response identifier, indicating that the called-user line is forwarded to an interception center.

The response identifier is generally added to an information header field of the SIP response information. After the called end generates the SIP response information, an extension information header field P-CAS-INFO is added to the SIP response information, so that a corresponding response identifier can be added. Apparently, the response identifier may also be added to another position in the SIP response information, which is not limited in the present invention.

In the method provided in the present invention, an IMS system converts SIP response information into corresponding R2 information after receiving the SIP response information that includes a response identifier and is transmitted by a called end. In this way, a user state at the called end can be completely acquired, and reliability of information transmission between the IMS system and other communications network supporting R2 information is improved.

In addition, the IMS system transmits the R2 response information to a calling end after obtaining the SIP response information that includes a response identifier and converting the SIP response information into the R2 response information, so that the calling end acquires a user state at the called end.

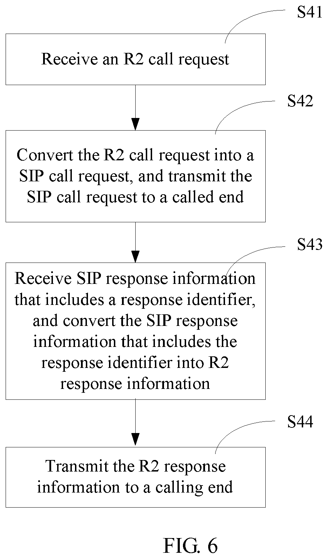

Further, the present invention further discloses a fourth embodiment, so as to describe an operation that is executed by an IMS system after R2 call request information transmitted by a calling end is received. Referring to a schematic flowchart disclosed in FIG. 6, the fourth embodiment specifically includes the following steps:
Step S41: An IMS system receives R2 call request information transmitted by a calling end.
Step S42: The IMS system converts the R2 call request information into corresponding SIP call request information, and transmits the SIP call request information to a called end, so that the called end generates corresponding SIP response information that includes a response identifier.
Step S43: The IMS system receives the SIP response information that includes the response identifier and is sent by the called end, acquires corresponding user state information according to the response identifier, and converts the user state information and the SIP response information into corresponding R2 response information.
Step S44: The IMS system transmits the R2 response information to the calling end, so that the calling end acquires a user state at the called end.

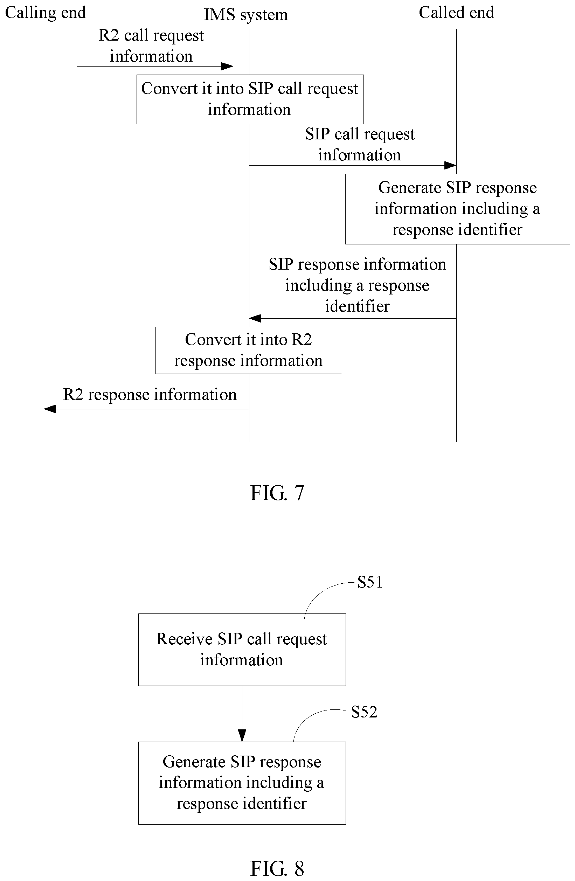

Specifically, when the calling end supports ITUT R2 signaling and a user state at the called end is "called-user line free, charge", refer to a flowchart of information interaction shown in FIG. 7, which includes the following steps:
Step S201: A calling end generates R2 call request information, and transmits the R2 call request information to an IMS system, where the R2 call request information is ITUT R2 call request information.
Step S202: The IMS system converts the R2 call request information into SIP call request information, and transmits the SIP call request information to a called end.
Step S203: After receiving the SIP call request, the called end generates, according to a user state, SIP response information that includes a response identifier, and transmits the SIP response information to the IMS system. Because a user state at the called end is "called-user line free, charge", the response identifier is: "user-state=idle, and charge=yes", and the response identifier is added to the SIP response information. Specifically, the response identifier may be added to an extension information header field in the SIP response information, or apparently, may be added in another form, which is not limited in the present invention.
Step S204: After receiving the SIP response information that includes the response identifier, the IMS system acquires corresponding user state information according to the response identifier, converts the SIP response information and the user state information into B-6 R2 response information, and transmits the B-6 R2 response information to the calling end.

In step S201 to step S204, the solution of converting SIP response information into R2 protocol information is merely an example, and SIP response information that includes another response identifier may also be generated according to a user state at the called end. For example, when the calling end supports the ITUT R2 protocol, the called end supports the SIP protocol, and the user state at the called end is "called-user line free, no charge", the IMS system converts ITUT R2 call request information into SIP request information after receiving the ITUT R2 call request information, transmits the SIP request information to the called end. A response identifier generated by the called end according to the user state is: "user-state=idle, charge=no", the SIP response information that includes the response identifier is transmitted to the IMS system, and the IMS system converts the SIP response information that includes the response identifier into B-7 ITUT R2 response information, and transmits the B-7 ITUT R2 response information to the calling end.

In addition, the calling end may support Brazil R2 signaling depending on operator choice. In this case, when the calling end generates Brazil R2 call request information, the IMS system converts the R2 call request information into corresponding SIP request information, and transmits the SIP request information to the called end. When the user state at the called end is "called-user line free, charge", a response identifier generated by the called end is: "user-state=idle, and charge=yes", the called end transmits SIP response information that includes the response identifier to the IMS system, and the IMS system converts the SIP response information that includes the response identifier into B-1 Brazil R2 response information, and transmits the B-1 Brazil R2 response information to the calling end. When the user state at the called end is "called-user line free, no charge", a response identifier generated by the called end after receipt of the SIP request information from the IMS system is: "user-state=idle, and charge=no", the called end transmits SIP response information that includes the response identifier to the IMS system, and the IMS system converts the SIP response information that includes the response identifier into B-5 Brazil R2 response information, and transmits the B-5 Brazil R2 response information to the calling end. When the user state at the called end is "called-user line free, charge, called party release", a response identifier generated by the called end after receipt of the SIP request information from the IMS system is: "user-state=idle, charge=yes, and Call-Control=called-control", the called end transmits SIP response information that includes the response identifier to the IMS system, and the IMS system converts the SIP response information that includes the response identifier into B-6 Brazil R2 response information, and transmits the B-6 Brazil R2 response information to the calling end. When the user state at the called end is an express or free call, a response identifier generated by the called end after receipt of the SIP request information from the IMS system is: Express-or-free, the called end transmits SIP response information that includes the response identifier to the IMS system, and the IMS system converts the SIP response information that includes the response identifier into B-7 Brazil R2 response information, and transmits the B-7 Brazil R2 response information to the calling end.

Moreover, the calling end may support Thai R2 signaling depending on operator choice. In this case, when the calling end generates Thai R2 call request information, the IMS system converts the R2 call request information into corresponding SIP request information, and transmits the SIP request information to the called end. When the user state at the called end is called-user line transferred to interception center, a response identifier generated by the called end is Forward-to-Interception-center, the called end transmits SIP response information that includes the response identifier to the IMS system, and the IMS system converts the SIP response information that includes the response identifier into B-3 Thai R2 response information, and transmits the B-3 Thai R2 response information to the calling end. Apparently, the called end may also generate another response identifier according to a different user state, so that the IMS system converts SIP response information that includes the another response identifier into corresponding R2 response information, and transmits the R2 response information to the calling end, so that the calling end learns the user state at the called end.

In this case, the calling end may be a PBX supporting R2 signaling, and apparently, may also be another communications system supporting R2 signaling, which is not limited in the present invention.

Correspondingly, the present invention further discloses a method for transferring information under an IMS architecture, which is applicable to a communications system in which a called end supports the SIP protocol. Referring to a schematic diagram of a working procedure disclosed in FIG. 8, the method includes:
Step S51: Receive SIP call request information.
Step S52: Generate, according to the SIP call request information, corresponding SIP response information that includes a response identifier.

The response identifier is added to an information header field of the SIP response information; and the response identifier includes the following parameters: a User-state parameter indicating a user line state, and/or a charge indicator parameter Charge, and/or a Call-Control parameter indicating whether call release is controlled by a calling or called party, and/or a call type parameter Express-or-free, and/or a Forward-to-Interception-center parameter.

The method for transferring information disclosed in step S51 and step S52 is applicable to a situation in which a calling end supports the R2 protocol, and the called end supports the SIP protocol. In this situation, the calling end generates an R2 call request and transmits it to an IMS system, the IMS system converts the received R2 call request information into SIP call request information, and transmits the SIP call request information to the called end, the called end generates corresponding SIP response information, adds a response identifier to the SIP response information, and transmits the SIP response information including the response identifier to the IMS system, and the IMS system converts the SIP response information including the response identifier into corresponding R2 response information, and transmits the R2 response information to the calling end, so that the calling end can acquire complete information of the called end.

According to the disclosed method for transferring information under an IMS architecture, when a communications system supporting R2 protocol information communicates with a communications system supporting SIP protocol information, protocol conversion may be performed by an IMS system. To prevent user state information from being lost when R2 response information is converted into SIP response information, a response identifier related to a user state is added to the SIP response information to indicate a user state of a called end, which otherwise cannot be reflected by the SIP response information; in addition, when the called end supports the SIP protocol, the called end directly generates, after receiving SIP call request information, SIP response information that includes a response identifier, so that a calling end can acquire complete user state information of the called end.

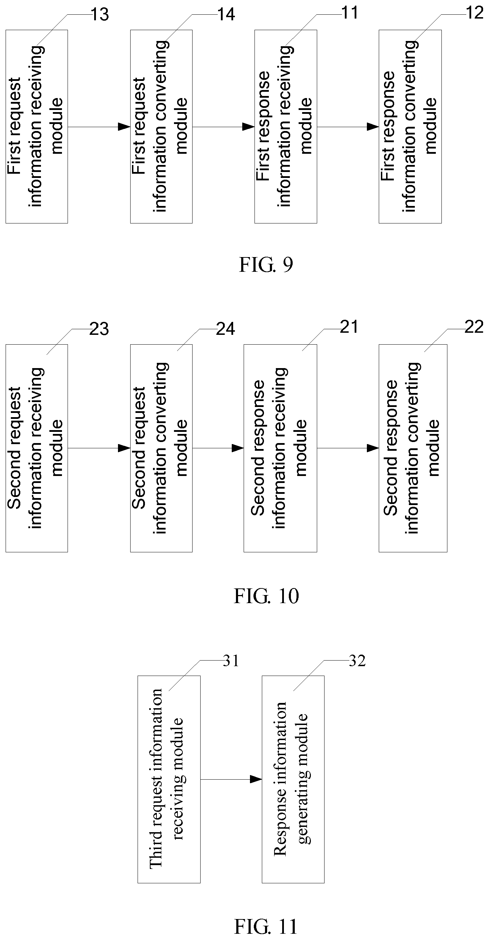

Correspondingly, the present invention further discloses an apparatus for transferring information under an IMS architecture, which is mainly applied to an IMS system. Referring to a schematic structural diagram shown in FIG. 9, the apparatus includes: a first response information receiving module 11 and a first response information converting module 12.

The first response information receiving module 11 is configured to receive R2 response information transmitted by a called end.

The first response information converting module 12 is configured to convert the R2 response information into corresponding SIP response information, and add a response identifier corresponding to the R2 information to the SIP response information.

Further, the apparatus for transferring information under an IMS architecture further includes: a first request information receiving module 13 and a first request information converting module 14.

The first request information receiving module 13 is configured to receive SIP call request information transmitted by a calling end.

The first request information converting module 14 is configured to convert the SIP call request information into corresponding R2 call request information, and transmit the R2 call request information to the called end, so that the called end generates corresponding R2 response information according to the R2 call request information.

The response identifier is added to an information header field of the SIP response information.

The response identifier includes: a parameter indicating a user line state, and/or a charge indicator parameter, and/or a parameter indicating whether call release is controlled by a calling or called party, and/or a call type parameter, and/or a forward-to-interception-center parameter.

In addition, the present invention further discloses an apparatus for transferring information under an IMS architecture, which is mainly applied to an IMS system. Referring to a schematic structural diagram shown in FIG. 10, the apparatus for transferring information under an IMS architecture includes: a second response information receiving module 21 and a second response information converting module 22.

The second response information receiving module 21 is configured to receive SIP response information that includes a response identifier and is transmitted by a called end.

The second response information converting module 22 is configured to acquire user state information according to the response identifier, and convert the user state information and the SIP response information into corresponding R2 response information.

Further, the apparatus for transferring information under an IMS architecture includes: a second request information receiving module 23 and a second request information transforming module 24.

The second request information receiving module 23 is configured to receive R2 call request information transmitted by a calling end.

The second request information converting module 24 is configured to convert the R2 call request information into corresponding SIP call request information, and transmit the SIP call request information to the called end, so that the called end generates corresponding SIP response information that includes a response identifier.

The response identifier is added to an information header field of the SIP response information.

The response identifier includes: a parameter indicating a user line state, and/or a charge indicator parameter, and/or a parameter indicating whether call release is controlled by a calling or called party, and/or a call type parameter, and/or a forward-to-interception-center parameter.

In addition, the present invention further discloses an apparatus for transferring information under an IMS architecture, which is mainly applied to a called end. Referring to a schematic structural diagram shown in FIG. 11, the apparatus for transferring information under an IMS architecture includes: a third request information receiving module 31 and a response information generating module 32.

The third request information receiving module 31 is configured to receive SIP call request information.

The response information generating module 32 is configured to generate, according to the SIP call request information, corresponding SIP response information that includes a response identifier.

The first response information converting module 12, the first request information converting module 14, the second response information converting module 22, and the second request information converting module 24 may be an MGCF or an AGCF or another functional module of an IMS system, which is not limited in the present invention.

According to the disclosed apparatus for transferring information under an IMS architecture, to prevent user state information from being lost when R2 response information is converted into SIP response information, an IMS system adds a response identifier related to a user state to the SIP response information, so as to convey a user state of a called end which otherwise cannot be reflected by the SIP response information; and in addition, when the called end supports the SIP protocol, the called end directly generates, after receiving SIP call request information, SIP response information that includes a response identifier, so that a calling end can acquire complete user state information of the called end.

Correspondingly, the present invention further discloses a communications system. The communications system is generally used as an IMS system, and mainly includes: a first response information receiving module 11 and a first response information converting module 12, and may further include: a first request information receiving module 13 and a first request information converting module 14.

Further, the present invention further discloses a communications system. The communications system is generally used as an IMS system, and mainly includes: a second response information receiving module 21 and a second response information converting module 22, and may further include: a second request information receiving module 23 and a second request information converting module 24.

Further, the present invention further discloses a communications system. The communications system is generally used as a called end, and mainly includes: a third request information receiving module 31 and a response information generating module 32.

Correspondingly, the present invention further discloses a communications apparatus. The communications apparatus includes a processor and a memory coupled to the processor.

The processor is configured to receive R2 response information transmitted by a called end, convert the R2 response information into corresponding SIP response information, and add a response identifier corresponding to the R2 information to the SIP response information.

The memory is configured to store information that includes a program run by the processor.

Further, the present invention further discloses a communications apparatus. The communications apparatus includes a processor and a memory coupled to the processor.

The processor is configured to receive SIP response information that includes a response identifier and is transmitted by a called end, and convert the SIP response information that includes the response identifier into corresponding R2 response information.

The memory is configured to store information that includes a program run by the processor.

Further, the present invention further discloses a communications apparatus. The communications apparatus includes a processor and a memory coupled to the processor.

The processor is configured to receive SIP call request information, and generate, according to the SIP call request information, corresponding SIP response information that includes a response identifier.

The memory is configured to store information that includes a program run by the processor.

Based on the foregoing descriptions of the embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blue-ray disc, where the disk generally copies data by a magnetic means, and the disc copies data optically by a laser means. The foregoing combination should also be included in the protection scope of the computer-readable medium.

It should be noted that the embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for execution processes of specific functions of each unit, reference may be made to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. A part or all of the modules may be selected according to actual needs to achieve the objectives of the solutions of the embodiments. A person of ordinary skill in the art may understand and implement the embodiments of the present invention without creative efforts.

The foregoing is merely exemplary embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. A method for transferring information under an Internet Protocol Multimedia Subsystem, hereinafter referred to as IMS, architecture, comprising:
receiving (S11) Channel Associated Signalling Revision 2, hereinafter referred to as R2, response information transmitted by a called end; and
converting (S12) the R2 response information into corresponding Session Initiation Protocol, hereinafter referred to as SIP, response information; and
adding (S12) a response identifier corresponding to the R2 response information to the SIP response information;
**characterized by** wherein the response identifier comprises at least one of the following: a parameter indicating a user line state, a charge indicator parameter, a parameter indicating whether call release is controlled by a calling or called party, a call type parameter, and a forward-to-interception-center parameter.

2. The method according to claim 1, wherein before the receiving the R2 response information transmitted by the called end, the method further comprises:
receiving (S21) SIP call request information transmitted by a calling end;
converting (S22) the SIP call request information into corresponding R2 call request information; and
transmitting (S22) the R2 call request information to the called end, so that the called end generates corresponding R2 response information according to the R2 call request information.

3. An apparatus for transferring information under an Internet Protocol Multimedia Subsystem, hereinafter referred to as IMS, architecture, comprising:
a first response information receiving module (11), configured to receive Channel Associated Signalling Revision 2, hereinafter referred to as R2, response information transmitted by a called end; and
a first response information converting module (12), configured to convert the R2 response information into corresponding Session Initiation Protocol, hereinafter referred to as SIP, response information, and add a response identifier corresponding to the R2 response information to the SIP response information;
**characterized by** wherein the response identifier comprises at least one of the following: a parameter indicating a user line state, a charge indicator parameter, a parameter indicating whether call release is controlled by a calling or called party, a call type parameter, and a forward-to-interception-center parameter.

4. The apparatus according to claim 3, wherein the apparatus further comprises:
a first request information receiving module (13), configured to receive SIP call request information transmitted by a calling end; and
a first request information converting module (14), configured to convert the SIP call request information into corresponding R2 call request information, and transmit the R2 call request information to the called end, so that the called end generates corresponding R2 response information according to the R2 call request information.

## Patentansprüche

1. Verfahren zum Übertragen von Informationen unter einer Internetprotokoll-Multimediasubsystem-Architektur, nachfolgend als IMS-Architektur bezeichnet, umfassend:
Empfangen (S11) von Antwortinformationen einer kanalgebundenen Zeichengabe Revision 2, nachfolgend als R2-Antwortinformationen bezeichnet, die durch ein angerufenes Ende übertragen werden; und
Umwandeln (S 12) der R2-Antwortinformationen in entsprechende Sitzungsinitialisierungsprotokoll-Antwortinformationen, nachfolgend als SIP-Antwortinformationen bezeichnet; und
Hinzufügen (S 12) einer Antwortkennung, die den R2-Antwortinformationen entspricht, zu den SIP-Antwortinformationen;
wobei die Antwortkennung einen Parameter, der einen Benutzerleitungszustand angibt, und/oder einen Ladezustandsanzeigeparameter und/oder einen Parameter, der angibt, ob eine Anruffreigabe durch eine anrufende oder eine angerufene Partei gesteuert wird, und/oder einen Anrufartparameter und/oder einen Weiterleiten-zu-Überwachungszentrum-Parameter umfasst.

2. Verfahren nach Anspruch 1, wobei das Verfahren vor dem Empfangen der R2-Antwortinformationen, die durch das angerufene Ende übertragen werden, ferner Folgendes umfasst:
Empfangen (S21) von SIP-Anrufanforderungsinformationen, die durch ein anrufendes Ende übertragen werden;
Umwandeln (S22) der SIP-Anrufanforderungsinformationen in entsprechende R2-Anrufanforderungsinformationen und
Übertragen (S22) der R2-Anrufanforderungsinformationen zum angerufenen Ende, so dass das angerufene Ende entsprechende R2-Antwortinformationen gemäß den R2-Anrufanforderungsinformationen erzeugt.

3. Vorrichtung zum Übertragen von Informationen unter einer Internetprotokoll-Multimediasubsystem-Architektur, nachfolgend als IMS-Architektur bezeichnet, umfassend:
ein erstes Antwortinformationen-Empfangsmodul (11), das dazu konfiguriert ist, Antwortinformationen einer kanalgebundenen Zeichengabe Revision 2, nachfolgend als R2-Antwortinformationen bezeichnet, die durch ein angerufenes Ende übertragen werden, zu empfangen; und
ein erstes Antwortinformationen-Umwandlungsmodul (12), das dazu konfiguriert ist, die R2-Antwortinformationen in entsprechende Sitzungsinitialisierungsprotokoll-Antwortinformationen, nachfolgend als SIP-Antwortinformationen bezeichnet, umzuwandeln und eine Antwortkennung, die den R2-Antwortinformationen entspricht, zu den SIP-Antwortinformationen hinzuzufügen;
wobei die Antwortkennung einen Parameter, der einen Benutzerleitungszustand angibt, und/oder einen Ladezustandsanzeigeparameter und/oder einen Parameter, der angibt, ob eine Anruffreigabe durch eine anrufende oder eine angerufene Partei gesteuert wird, und/oder einen Anrufartparameter und/oder einen Weiterleiten-zu-Überwachungszentrum-Parameter umfasst.

4. Vorrichtung nach Anspruch 3, wobei die Vorrichtung ferner Folgendes umfasst:
ein erstes Anforderungsinformationen-Empfangsmodul (13), das dazu konfiguriert ist, SIP-Anrufanforderungsinformationen, die durch ein anrufendes Ende übertragen werden, zu empfangen; und
ein erstes Anforderungsinformationen-Umwandlungsmodul (14), das dazu konfiguriert ist, die SIP-Anrufanforderungsinformationen in entsprechende R2-Anrufanforderungsinformationen umzuwandeln und die R2-Anrufanforderungsinformationen zum angerufenen Ende zu übertragen, so dass das angerufene Ende entsprechende R2-Antwortinformationen gemäß den R2-Anrufanforderungsinformationen erzeugt.

## Revendications

1. Procédé de transfert d'informations dans une architecture de sous-système multimédia de protocole Internet, ci-après dénommée IMS, comprenant de:
recevoir (S11) des informations de réponse de signalisation voie par voie Révision 2, ci-après dénommées R2, transmises par une extrémité appelée; et
convertir (S 12) les informations de réponse R2 en informations de réponse de protocole d'initiation de session, ci-après dénommées SIP, correspondantes; et
ajouter (S 12) un identificateur de réponse correspondant aux informations de réponse R2 aux informations de réponse SIP;
**caractérisé en ce que** l'identificateur de réponse comprend au moins l'un des éléments suivants : un paramètre indiquant un état de ligne d'utilisateur, un paramètre d'indicateur de charge, un paramètre indiquant
si la libération d'appel est commandée par un appelant ou un appelé, un paramètre de type d'appel, et un paramètre de transfert vers un centre d'interception.

2. Procédé selon la revendication 1, dans lequel, avant la réception des informations de réponse R2 transmises par l'extrémité appelée, le procédé comprend en outre de:
recevoir (S21) des informations de demande d'appel SIP transmises par une extrémité appelante;
convertir (S22) les informations de demande d'appel SIP en informations de demande d'appel R2 correspondantes; et
transmettre (S22) les informations de demande d'appel R2 à l'extrémité appelée, de sorte que l'extrémité appelée génère des informations de réponse R2 correspondantes en fonction des informations de demande d'appel R2.

3. Appareil de transfert d'informations dans une architecture de sous-système multimédia de protocole Internet, ci-après dénommée IMS, comprenant:
un premier module de réception d'informations de réponse (11), configuré pour recevoir des informations de réponse de signalisation voie par voie Révision 2, ci-après dénommées R2, transmises par une extrémité appelée; et
un premier module de conversion d'informations de réponse (12), configuré pour convertir les informations de réponse R2 en informations de réponse de protocole d'initiation de session, ci-après dénommées SIP, correspondantes, et ajouter un identificateur de réponse correspondant aux informations de réponse R2 aux informations de réponse SIP ;
**caractérisé en ce que** l'identificateur de réponse comprend au moins l'un des éléments suivants: un paramètre indiquant un état de ligne d'utilisateur, un paramètre d'indicateur de charge, un paramètre indiquant si la libération d'appel est commandée par un appelant ou un appelé, un paramètre de type d'appel et un paramètre de transfert vers un centre d'interception.

4. Appareil selon la revendication 3, dans lequel l'appareil comprend en outre:
un premier module de réception d'informations de demande (13), configuré pour recevoir des informations de demande d'appel SIP transmises par une extrémité appelante; et
un premier module de conversion d'informations de demande (14), configuré pour convertir les informations de demande d'appel SIP en informations de demande d'appel R2 correspondantes, et transmettre les informations de demande d'appel R2 à l'extrémité appelée, de sorte que l'extrémité appelée génère des informations de réponse R2 correspondantes selon les informations de demande d'appel R2.
